# EUROPÄISCHE PATENTSCHRIFT

(11) **EP 2 925 464 B1**
(45) Veröffentlichungstag und Bekanntmachung des Hinweises auf die Patenterteilung: **25.04.2018**
(21) Anmeldenummer: 12810120.1
(22) Anmeldetag: 28.11.2012
(51) Int. Cl.: B21C 37/16, B21D 19/10, B21D 41/04, B21D 53/88, B21C 1/26, B23K 33/00, B60G 15/06

(54) **STIRNSEITIG FLUIDDICHT VERSCHLOSSENES ZYLINDERROHR UND VERFAHREN ZU DESSEN HERSTELLUNG**
CYLINDER TUBE CLOSED AT THE END SO AS TO BE FLUID-TIGHT AND METHOD FOR PRODUCTION THEREOF
TUBE CYLINDRIQUE ÉTANCHE AUX FLUIDES DU CÔTÉ FRONTAL ET PROCÉDÉ POUR LE FABRIQUER

(43) Veröffentlichungstag der Anmeldung: 07.10.2015
(73) Patentinhaber: SchmitterGroup AG, 97289 Thüngen (DE)
(72) Erfinder: GÜNTHER, Friedhelm, 44359 Dortmund (DE); SCHMIDT, Marco, 97289 Thüngen (DE); DIRSCHERL, Ralf, 97289 Thüngen (DE)
(74) Vertreter: Götz, Georg Alois
(86) Internationale Anmeldenummer: PCT/EP2012/073867
(87) Internationale Veröffentlichungsnummer: WO 2014/082666

(56) Entgegenhaltungen:
- EP-A1- 0 074 224
- DE-U1- 20 120 098
- JP-A- S5 756 117
- US-A- 4 732 030
- US-A- 5 990 441

## Beschreibung

Die Erfindung betrifft ein stirnseitig fluiddicht verschlossenes Zylinderrohr sowie ein Verfahren zu dessen Herstellung. Ein solches Zylinderrohr dient als Stoßdämpferrohr eines Stoßdämpfers eines Kraftfahrzeuges, also eine Zylinderrohrkomponente für Kfz-Stoßdämpfer, welche in der Regel mit einem Anschweißhalter versehen sind. "Fluiddicht" bedeutet Dichtheit gegenüber Flüssigkeit und/oder Gas. Insbesondere sind hier gasdichte Zylinderrohre angesprochen.

Bekannt ist es, ein derartiges Zylinderrohr aus einem Präzisrohr, beispielsweise DIN EN 10305-2, E235 +C, herzustellen. Das Präzisrohr wird dann am gewünschten Rohrende bzw. der jeweiligen Stirnseite durch Kalt- und/oder Warmumformung fluiddicht verschlossen. An dem so entstandenen, wandverdickten Boden bzw. Rohrboden wird dann ein Halter angeschweißt, so dass ein Anschweißhalter entsteht. Der Halter weist in der Regel die Form einer Gabel oder eines Rings - auch Auge genannt - auf. Ein entsprechender Ring-Halter ermöglicht dann auch das Einsetzen bzw. Einpassen eines Gummilagers. Der Halter dient der Befestigung des Stoßdämpfers an der Kfz-Karosserie bzw. den Fahrwerksteilen. Das Gummilager, auch Silent-Lager genannt, dient in der Regel dazu, Klappergeräusche zu vermeiden.

Dokument US-A-5,990,441 offenbart ein Verfahren zur Herstellung eines stirnseitig fluiddicht verschlossenen Zylinderrohres, das ein Stoßdämpferrohr eines Stoßdämpfers eines Kraftfahrzeuges ist, aus einem rohrförmigen Rohling. Der Rohling wird an einem stirnseitigen Endbereich eingezogen und seine Öffnung beim Aufschweissen eines Ringhalters in einem Montagebereich im radial inneren Bereich des Endbereiches fluiddicht verschlossen.

Aus der JP S57 56117 A ist ein Abstreckverfahren zur Herstellung eines Rohres mit unterschiedlichen Wandstärken bekannt. Hierzu wird ein Dorn, der Bereiche mit unterschiedlichem Durchmesser aufweist in den Rohrrohling eingeführt, wobei der innere Querschnitt des Rohrrohlings dem jeweiligen Durchmesser des Dorns mittels Abstreckverfahren angepasst wird. Insbesondere wird ein Rohrende mit einer Verjüngung bzw. einer Querschnittsverminderung versehen.

Die EP 0 074 224 A1 offenbart ein Rohr, dessen Rohrende mittels Kaltumformverfahren zur Erzeugung einer Schweißfläche verjüngt wurde. Das verjüngte Rohrende lässt sich an ein zweites quer verlaufendes Rohr anschweißen, um beispielsweise Zäune, Gerüste oder Masten zu konstruieren.

Bekannt ist auch, ein solches Zylinderrohr mittels Tiefziehverfahren mit sehr vielen Umformstufen und Zwischenglühungen herzustellen. Der Anschweißhalter wird dann an den bereits am Zylinderrohr angeformten Boden, also Rohrboden angeschweißt.

Aufgabe der Erfindung ist es, ein verbessertes Zylinderrohr sowie ein verbessertes Verfahren zu dessen Herstellung anzugeben.

Hinsichtlich des Verfahrens wird die Aufgabe gelöst durch ein Verfahren gemäß Patentanspruch 1. Das Verfahren dient zur Herstellung eines Zylinderrohres in Form eines Stoßdämpferrohres eines Stoßdämpfers eines Kraftfahrzeuges. Das Zylinderrohr wird aus einem rohrförmigen Rohling hergestellt. Insbesondere weist dieser sowohl in Umfangsrichtung als auch in Axialrichtung eine konstante Wanddicke auf. Das Verfahren weist folgende Schritte auf:

Zunächst wird mit Hilfe eines Kaltumformverfahrens der Rohling in gewünschter Geometrie und Beschaffenheit zum Zylinderrohr umgeformt. Der Rohling besteht aus einem kaltverformbaren Material, insbesondere einem längs geschweißten normalgeglühten Stahlrohr. Als Kaltumformverfahren kommt hier das Abstreckziehen, auch Abstrecken genannt, zum Einsatz. Die Umformung geschieht derart, dass an einem stirnseitigen, fluiddicht zu verschließenden Endbereich des Zylinderrohres eine Öffnung im Rohling bzw. Zylinderrohr verbleibt. Mit anderen Worten wird am Rohling selbst kein geschlossener Rohrboden erzeugt. In einem weiteren Verfahrensschritt wird im radial äußeren Randbereich des Endbereiches ein zu einer späteren Anbringung eines Endstückes dienender Montagebereich erzeugt. In einem weiteren Verfahrensschritt wird das Zylinderrohr verschlossen, indem ein die Öffnung fluiddicht verschließendes Endstück am Montagebereich fluiddicht angebracht wird. Das Anbringen erfolgt insbesondere durch fluiddichtes Verschweißen. Der Montagebereich ist dann ein für ein Anschweißen geeigneter Schweißbereich, der für den Schweißvorgang auch geeignet dimensioniert ist, d.h. ausreichend belastbar, dick, fest usw. ist. Durch das Anbringen des Endstücks wird am Zylinderrohr ein fluiddichter Rohrboden erzeugt.

Das erfindungsgemäße Verfahren bietet den Vorteil, dass das Zylinderrohr in den kalt umgeformten Bereichen jeweils gewünschte, also gezielte Wanddicken und Festigkeiten aufweisen kann. Denn durch eine geeignete Parametrierung des Umformverfahrens sind diese Eigenschaften gut einstellbar bzw. erzielbar. Die Einstellung der gezielten Wanddicke und Festigkeit in den kaltumgeformten Bereichen ist einstellbar z.B. durch Dicke und Grundmaterial des Rohlings, Vorbehandlung des Rohlings, Form einer zum Abstrecken verwendeten Matrize. Beim Kaltumformen wird also insbesondere die Wandstärke bzw. Wanddicke des Rohlings reduziert und/oder den Innen- und/oder Außendurchmesser des Rohlings verändert, durch ein- oder mehrmaliges Abstreckziehen, wodurch sich der Rohling in der Regel in axialer Richtung verlängert.

Gegebenenfalls erfolgt nach dem Kaltumformen dann ein Ablängen des Zylinderrohres an demjenigen Ende, welches dem fluiddicht verschlossenen Ende gegenüberliegt.

In einer bevorzugten Ausführungsform des Verfahrens wird mit einem dem Abstreckziehen vorgelagerten Kaltumformverfahren eine die stirnseitige Rohröffnung umgebende Mitnehmerkante am Endbereich des Rohlings ausgebildet. Zumindest ein Teil des Montagebereiches wird hierbei als zumindest ein Teil der Mitnehmerkante ausgebildet. Die Mitnehmerkante dient für das den Rohling zum Zylinderrohr umformende Abstreckziehverfahren, nämlich dem Gegenhalten des Rohlings auf einem Dorn, wenn dieser mit Hilfe einer Pressmatrize abgestreckt wird. Der Montagebereich wird hierbei insbesondere schweißgerecht als Schweißbereich dimensioniert, indem die Mitnehmerkante entsprechend dimensioniert ausgebildet wird. Mit anderen Worten wird also eine Mitnehmerkante erzeugt, die nicht nur ihrem eigentlichen Zweck als Mitnehmerkante dient, sondern eine Doppelfunktion als Montagebereich, insbesondere Schweißbereich erfüllen kann. Beispielsweise wird die Mitnehmerkante daher größer oder voluminöser oder mit weitergehenden Materialeigenschaften dimensioniert und hergestellt, als für das eigentliche Abstreckziehverfahren nötig wäre.

In einer weiteren bevorzugten Ausführungsform des Verfahrens wird der Montagebereich zusammen mit zumindest einem Teil des Zylinderrohres in einem einzigen Arbeitsgang des Abstreckziehens aus dem Rohling erzeugt bzw. fertiggestellt. So wird beispielsweise insbesondere nach Anformung der Mitnehmerkante am Rohling und Auffädeln des Rohlings auf einen Dorn der Rohling von der entsprechenden Stirnseite her abgestreckt. Dabei wird gleichzeitig der Bereich der Mitnehmerkante, sowie der sich daran anschließende Bereich des Zylinderrohres abgestreckt und somit auch der Montagebereich im Bereich der Mitnehmerkante behandelt, insbesondere fertig gestellt - zusammen mit zumindest einem Teil des Zylinderrohres.

Erfindungsgemäß wird der Rohling derart umgeformt, dass nach Art eines Leichtbauteils im Bereich eines Kraft- und/oder Schweißknotens eine größere Wandstärke und/oder Festigkeit als am sonstigen Zylinderrohr geschaffen wird. So ist es möglich, das Zylinderrohr als beanspruchungsgerechtes und kostengünstiges Leichtbauteil herzustellen. Hier werden die Vorteile des Abstreckziehverfahrens - zur Herstellung von Leichtbauteilen mit der besonders einfachen erfindungsgemäßen Art und Weise des stirnseitigen fluiddichten Verschließens des Zylinderrohes kombiniert. Besonderheiten und Vorteile der Verwendung eines Abstreckziehverfahrens zur Herstellung rohrförmiger Leichtbauteile sind beispielsweise der DE 10 2007 045 719 A1 der Anmelderin zu entnehmen.

In einer bevorzugten Variante der eben genannten Ausführungsform wird der Rohling in einem sich an den Endbereich axial anschließenden ersten Bereich bzw. Axialbereich nach Art eines Leichtbauteils derart umgeformt, dass der erste Bereich wandstärkenreduziert ausgebildet wird. Mit anderen Worten wird der erste Bereich relativ zu anderen Bereichen des Zylinderrohres dünnwandig ausgeführt. Der erste Bereich dient im Falle eines Stoßdämpferrohres dann als Kolbenlaufbereich. Diese Verfahrensvariante bietet sich insbesondere an, um gemäß oben sowohl den ersten Bereich als auch den Montagebereich in einem einzigen Arbeitsgang herzustellen. Insbesondere werden beide Bereiche mit Hilfe einer einzigen ersten Matrize abgestreckt, wobei dann im Montagebereich ein in der Relation dickwandiger Kraft- bzw. Schweißknoten geschaffen wird.

In einer weiteren bevorzugten Variante der oben genannten Ausführungsform wird der Rohling in einem zweiten Axialbereich derart umgeformt, dass der zweite Bereich nach Art eines Leichtbauteils als mechanisch stabiler Befestigungsbereich ausgebildet, wobei die Wandstärke in dem zweiten Bereich größer ist als in dem ersten Bereich. Insbesondere ist der zweite ein sich axial an den ersten Bereich anschließender Bereich bzw. Axialbereich, der relativ zu anderen Bereichen des Zylinderrohres, insbesondere zum ersten Bereich, dickwandig ausgeführt ist. So entsteht im zweiten Bereich ein Kraft- bzw. Schweißknoten, welcher bei Verwendung als Stoßdämpferrohr zur Montage der Kolbenstangenführung dient.

Bei einer weiteren bevorzugten Verfahrensvariante wird das Abstreckziehen im Endbereich, im ersten und zweiten Bereich, gemeinsam auf einem selben, in den Rohling eingeführten Dorn ausgeführt. Der Dorn ist insbesondere kreiszylinderförmig, d.h. weist wenigstens im Bereich des herzustellenden Zylinderrohres konstanten Durchmesser auf. Ein konstanter Durchmesser bzw. eine Kreiszylinderform schließt in diesem Zusammenhang auch Formen ein, welche sehr geringfügig konisch ausgebildet sind, um in bekannter Weise ein Ablösen des fertig umgeformten Zylinderrohres vom Dorn zu erleichtern. In der Regel erfolgt dann ein Abstreifen des umgeformten Rohlings vom Dorn vor dem erfindungsgemäßen Anbringen des Endstücks am Montagebereich, insbesondere vor dem Anschweißen.

Erfindungsgemäß wird ein solches Endstück verwendet, das einen Gabel- oder Ringhalter eines Stoßdämpfers aufweist. Mit anderen Worten wird der bekannte Gabel- oder Ringhalter eines Stoßdämpfers also am Endstück angebracht oder zusammen mit diesem ausgeführt, was wiederum vor oder nach dem Anbringen des Endstücks am Zylinderrohr erfolgen kann.

In einer bevorzugten Variante wird ein solches Endstück verwendet, das einen Mitteilteil eines Gabelhalters bildet. Insbesondere ist dabei der Gabelhalter mit dem Endstück einstückig ausgeführt. Ein entsprechender Gabelhalter ist in der Regel U-förmig und bandförmig gestaltet. Das Mittelteil des Gabelhalters erfüllt dann eine Doppelfunktion als Endstück des Zylinderrohres.

In einer weiteren Variante wird ein solches Endstück verwendet, das eine am Ringhalter angebrachte Scheibe bildet. Mit anderen Worten ist der Ringhalter also an der Scheibe angebracht, insbesondere angeschweißt. Ein fluiddichtes Anschweißen ist hier nicht nötig, da die Fluiddichtheit schon zwischen der Scheibe und dem Zylinderrohr hergestellt ist.

Hinsichtlich des Zylinderrohres wird die Aufgabe der Erfindung gelöst durch ein stirnseitig fluiddicht verschlossenes Zylinderrohr gemäß Patentanspruch 9. Vorteilhafte Weiterbildungen sind in den zugehörigen Unteransprüchen genannt. Das Zylinderrohr wurde zusammen mit seinen Ausgestaltungen und Vorteilen bereits im Zusammenhang mit dem erfindungsgemäßen Verfahren erläutert, wobei anhand des Verfahrens die jeweils gegenständlichen Merkmale geschaffen werden.

Wie oben bereits erwähnt, findet das erfindungsgemäße Verfahren Verwendung zur Herstellung eines Stoßdämpferrohres für einen Stoßdämpfer eines Kraftfahrzeuges als Zylinderrohr.

Das erfindungsgemäße Zylinderrohr kann entsprechend Verwendung finden als Stoßdämpferrohr für einen Stoßdämpfer eines Kraftfahrzeugs.

Für eine weitere Beschreibung der Erfindung wird auf die Ausführungsbeispiele der Zeichnungen verwiesen. Es zeigen, jeweils in einer schematischen Prinzipskizze:
Fig.1 ein erfindungsgemäßes Zylinderrohr als Stoßdämpferrohr mit Gabelhalter,
Fig.2 einen Teil eines alternativen Zylinderrohres mit Ringhalter,
Fig. 3 einen rohrförmigen Rohling für das erfindungsgemäße Verfahren,
Fig. 4 das Anformen einer Mitnehmerkante am Rohling aus Fig. 3,
Fig. 5 Das Kaltumformen eines Endbereiches und eines ersten Bereichs des Zylinderrohres,
Fig. 6 das Kaltumformen eines zweiten Bereiches des Zlyinderrohres,
Fig. 7 das endbearbeitete Zylinderrohr,
Fig.8 das stirnseitig fluiddichte Verschließen durch Anbringen eines Endstückes am Zylinderrohr aus Fig. 7,
Fig. 9 das Verschließen des Zylinderrohres mit einem alternativen Endstück.

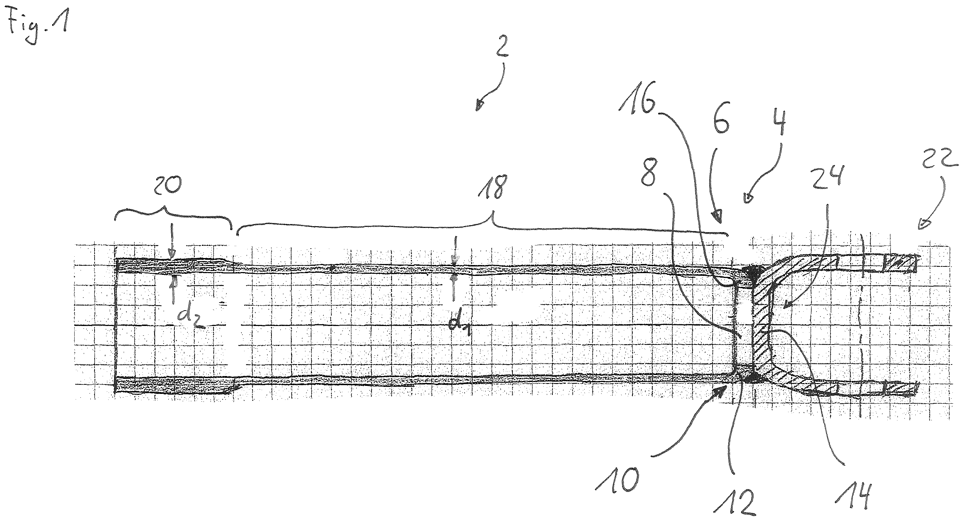

Fig. 1 zeigt ein Zylinderrohr 2, welches an seiner Stirnseite 4 fluiddicht verschlossen ist. Das Zylinderrohr ist ein Stoßdämpferrohr eines Stoßdämpfers eines Kraftfahrzeugs. Das Zylinderrohr 2 ist, wie weiter unten erläutert wird, aus einem rohrförmigen Rohling 30 mit Hilfe des Abstreckziehens umgeformt. In einem an der Stirnseite 4 gelegenen Endbereich 6 weist das Zylinderrohr eine Öffnung 8 auf. Beim Zylinderrohr 2 ist im stirnseitigen Endbereich 6 mit einem Kaltumformverfahren eine die Öffnung 8 umgebende Mitnehmerkante für das Abstreckziehverfahren 16 ausgebildet. Ein radial äußerer Randbereich 10 des Endbereichs 6 stellt einen Montagebereich 12 dar, im Beispiel einen Schweißbereich. Am Montagebereich 12 ist ein die Öffnung 8 fluiddicht verschließendes Endstück 14 fluiddicht angebracht, im vorliegenden Fall gasdicht verschweißt.

Ein Teil des Montagebereiches 12 ist hierbei als Teil der Mitnehmerkante 16 ausgebildet. Der Rest des Montagebereiches 12 reicht in das Zylinderrohr 2 bzw. dessen ersten axialen Bereich 18 hinein. Der Rohling 30 ist zum Zylinderrohr 2 derart umgeformt, dass nach Art eines Leichtbauteils im Bereich von Kraft- und/oder Schweißknoten größere Wandstärken und Festigkeiten am Zylinderrohr geschaffen sind als an anderen Bereichen des Zylinderrohrs. Insbesondere ist ein sich an den Endbereich 6 axial anschließender erster Bereich 18 des Zylinderrohres 2 nach Art eines Leichtbauteils wandstärkenreduziert relativ zu anderen Bereichen des Zylinderrohrs ausgebildet. Außerdem ist am Zylinderrohr 2 ein zweiter Axialbereich 20, welcher sich an den ersten Bereich 18 anschließt nach Art eines Leichtbauteils als mechanisch stabiler Befestigungsbereich ausgebildet.

Im Beispiel ist am Zylinderrohr 2 ein Gabelhalter 22 angebracht, der einstückig ausgebildet ist und dessen Mittelteil 24 das Endstück 14 ist. Im Beispiel beträgt die Wandstärke im ersten Bereich 18 d₁ = 1,2mm, im zweiten Bereich 20 beträgt die Wandstärke d₂ = 1,7mm, entscheidend ist, dass die Wandstärke im Bereich 18 kleiner ist als die im Bereich 20. Auch ergeben sich hier unterschiedliche Materialfestigkeiten. Im Beispiel stellt der erste Bereich 18 einen Kolbenlaufbereich des Stoßdämpfers dar, der zweite Bereich 20 einen Befestigungsbereich für die Kolbenstangenführung. Alle Zahlenangaben dieser Beschreibung sind lediglich als Beispiele zu verstehen. Insgesamt ergibt sich bei einer derartigen Dimensionierung eine Gewichtseinsparung von 20% - 30% am Zylinderrohr 2 durch die Ausführung als Leichtbauteil im Gegensatz zu einem konventionellen Bauteil, welches überall gleich Materialstärke wie im zweiten Bereich 20 aufweisen würde.

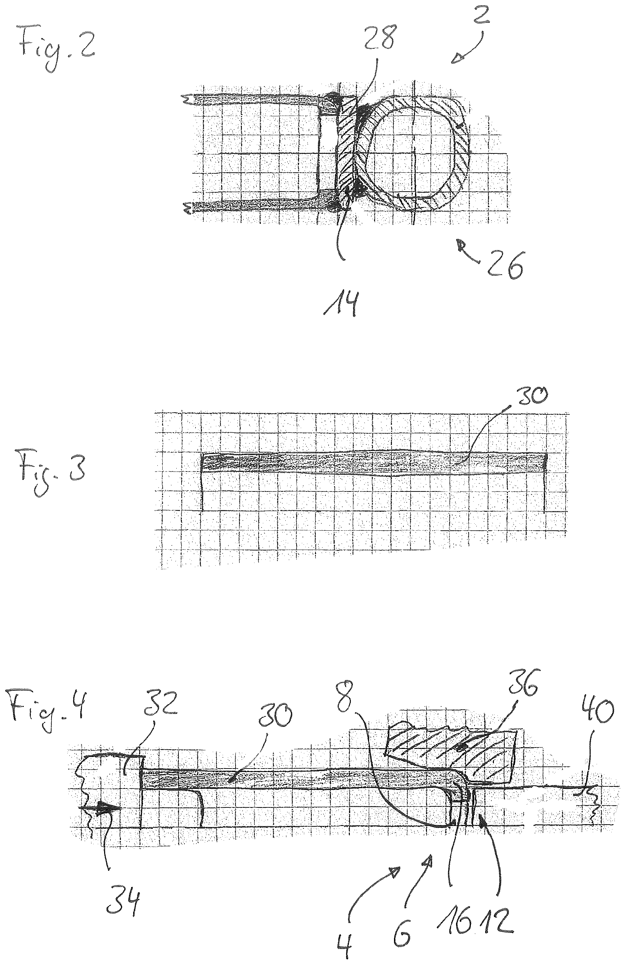

Fig. 2 zeigt einen Ausschnitt des Zylinderrohres 2 aus Fig. 1, jedoch mit einem Ringhalter 26 anstelle des Gabelhalters 22. Alternativ zur Ausführungsform gemäß Fig. 1 ist hier auch das Endstück 14 eine fluiddicht am Montagebereich 12 angebrachte, hier fluiddicht angeschweißte Scheibe 28. Die Scheibe 28 ist wiederum am Ringhalter 26 angebracht, im vorliegenden Fall verschweißt. Letztere Verschweißung muss hierbei nicht fluiddicht ausgeführt sein.

Fig. 3 zeigt einen rohrförmigen Rohling 30, welcher als Ausgangsmaterial für die Herstellung eines Zylinderrohres 2 gemäß der Figuren 1 oder 2 dient. Der Rohling 30 hat Abmessungen von 42mm x 2,5mm und entspricht DIN EN 10305-3, E235 +M oder E235 +CR1.

Fig. 4 zeigt, wie in einem ersten Verfahrensschritt am Rohling 30 aus Fig. 3 eine Mitnehmerkante 16 in dessen Endbereich 6, d.h. an der Stirnseite 4 angeformt wird. Hierzu wird der Rohling 30 mit Hilfe eines Stößels 32 in Richtung des Pfeils 34, also in Axialrichtung des Rohlings 30 bzw. des Zylinderrohres 2, in eine Matrize 36 eingedrückt. An der Stirnseite 4 wölbt sich der Rohling 30 radial nach innen, so dass die Mitnehmerkante 16 entsteht. Hierbei verbleibt eine Öffnung 8 an der Stirnseite 4, welche von der Mitnehmerkante 16 begrenzt ist. Anschließend wird der Stößel 32 entgegen der Richtung des Pfeils 34 zurückgezogen und der Rohling 30 entgegen der Richtung des Pfeils 34 mit Hilfe eines Ausstoßers 40 aus der Matrize 36 entfernt. Der Ausstoßer 40 kann dann in Richtung des Pfeils 34 wieder zurückgezogen werden. Durch Anformen der Mitnehmerkante 16 wird der Montagebereich 12 bereist vorbereitet. Die Mitnehmerkante wird dafür ausreichend groß, fest etc. hinsichtlich des Rohlings 30 und des Umformens dimensioniert.

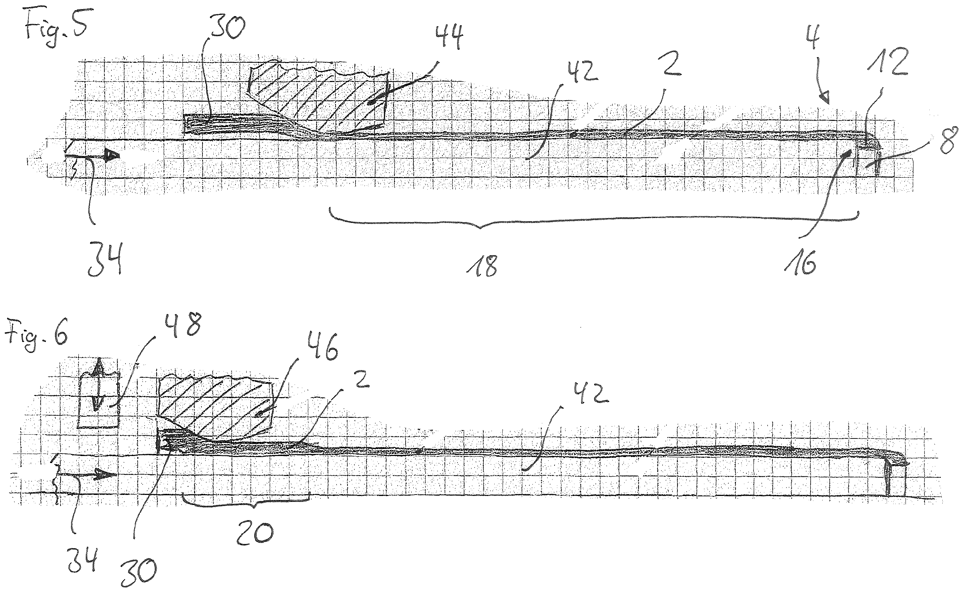

Fig. 5 zeigt, wie der erste Bereich 18 des Zylinderrohrs 2 abgestreckt wird. Der Rohling 30 gemäß Fig. 4 wird auf einen Dorn 42 aufgefädelt und anschließend beginnend von der Stirnseite 4 her entgegen der Richtung des Pfeils 34 ein Abstreckring 44 über den Rohling 30 gezogen. Im Bereich 18 verformt sich dabei der Rohling 30 in das Zylinderrohr 2. Gleichzeitig wird der Montagebereich 12 ebenfalls fertig gestellt, indem auch dieser im Bereich der Mitnehmerkante 16 und im anschließenden Teil des Bereiches 18 mit Hilfe des Abstreckrings 44 auf den entsprechenden Außendurchmesser gebracht wird.

Fig. 6 zeigt, wie auf demselben Dorn 42 der zweite Bereich 20 des Zylinderrohes 2 aus dem Rohling 30 umgeformt wird. Hier wird ein vom Abstreckring 44 verschiedener weiterer Abstreckring 46 mit größerem Innendurchmesser verwendet. Auch dieser wird wieder entgegen der Richtung des Pfeils 34 bewegt. Aufgrund desselben zylinderförmigen Dorns 42, welcher zumindest in den Bereichen 20 und 18 gleichen Durchmesser aufweist, und des größeren Innendurchmesser des zweiten Abstreckrings 46 verbleibt eine größere Wanddicke für das Zylinderrohr 2 im Bereich 20 als im Bereich 18 und im Endbereich 6. Nach Ende des Abstreckvorgangs wird der Abstreckring 46 in Richtung des Pfeils 34 vom Zylinderrohr 2 abgezogen und ein Abstreifer 48 in bekannter, nicht näher erläuterter Weise verwendet, um das Zylinderrohr 2 vom Dorn 42 in Richtung des Pfeils 34 abzustreifen. Der Abstreifer 48 ist hierzu angedeutet durch einen Doppelpfeil, radial beweglich.

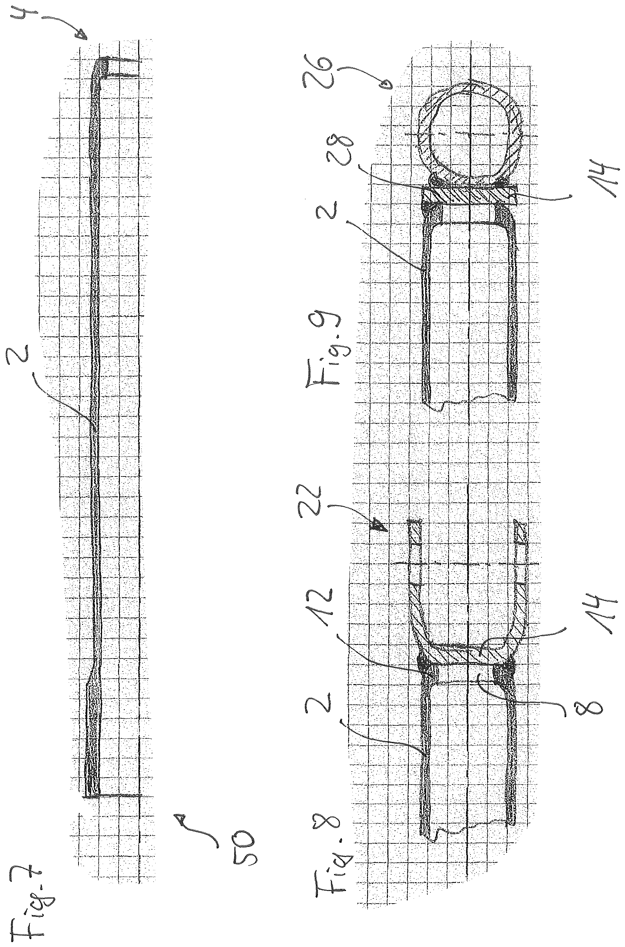

Fig. 7 zeigt, wie ausgehend von Fig. 6 das Zylinderrohr 2 endbearbeitet wird, indem am der Stirnseite 4 gegenüberliegenden Ende 50 der Rest des Rohlings 30 abgeschnitten wird und eine entsprechende Endbearbeitung stattfindet.

Streng genommen ist das bisher, also gemäß Fig. 7 hergestellte "Zylinderrohr 2" lediglich ein Rohrkörper, der durch Aufbringen des Endstückes 14 erst zum eigentlichen, fertiggestellten Zylinderrohr 2 komplettiert wird. Im Sinne einer einfacheren Darstellung und Lesbarkeit des Textes wurde jedoch auf diese Unterscheidung verzichtet.

Fig. 8 zeigt schließlich, ausgehend von Fig. 7 die Fertigstellung des Zylinderrohres 2. Am Montagebereich 12 wird der bereits im Zusammenhang mit Fig. 1 erläuterte Gabelhalter 22 und damit das Endstück 14 fluiddicht angebracht, im vorliegenden Fall gasdicht angeschweißt. Somit wird gleichzeitig die Öffnung 8 und damit das Ende des Zylinderrohres 2 an der Stirnseite 4 fluiddicht verschlossen.

Fig. 9 zeigt, ausgehend von Fig. 7, entsprechend zu Fig. 2 das fluiddichte Anbringen, hier ebenfalls gasdichte Anschweißen, des Endstücks 14 in Form einer Scheibe 28, mit dem wiederum an dieser angeschweißten Ringhalter 26.

### Bezugszeichenliste

2 Zylinderrohr
4 Stirnseite
6 Endbereich
8 Öffnung
10 Randbereich
12 Montagebereich
14 Endstück
16 Mitnehmerkante
18 erster Bereich
20 zweiter Bereich
22 Gabelhalter
24 Mittelteil
26 Ringhalter
28 Scheibe
30 Rohling
32 Stößel
34 Pfeil
36 Matrize
40 Ausstoßer
42 Dorn
44,46 Abstreckring
48 Abstreifer
50 Ende

d_{1,2} Wandstärke

## Patentansprüche

1. Verfahren zur Herstellung eines stirnseitig fluiddicht verschlossenen Zylinderrohres (2), das ein Stoßdämpferrohr eines Stoßdämpfers eines Kraftfahrzeuges ist, aus einem rohrförmigen Rohling (30), **gekennzeichnet durch** folgende Schritte:
(a) Umformen des Rohlings (30) zum Zylinderrohr (2) mit Hilfe eines Abstreckziehens als Kaltumformverfahren, derart, dass an einem stirnseitigen Endbereich (6) des Zylinderrohres (2) eine Öffnung (8) im Zylinderrohr (30) verbleibt und dass nach Art eines Leichtbauteils im Bereich eines Kraft- und/oder Schweißknotens eine größere Wandstärke (d_{1,2}) und/oder Festigkeit als am sonstigen Zylinderrohr (2) geschaffen wird,
(b) Erzeugung eines Montagebereiches (12) im radial äußeren Randbereich (10) des Endbereiches (6),
(c) Verschließen des Zylinderrohres (2) durch fluiddichtes Anbringen, insbesondere Verschweißen, eines die Öffnung (8) fluiddicht verschließenden Endstückes (14) am Montagebereich, das einen Gabel- (22) oder Ringhalter (26) eines Stoßdämpfers aufweist.

2. Verfahren nach Anspruch 1, bei dem vor dem Schritt (a) mit einem Kaltumformverfahren eine die Öffnung (8) umgebende Mitnehmerkante (16) für das den Rohling (30) zum Zylinderrohr (2) umformende Abstreckziehen am Endbereich (6) des Rohlings (30) ausgebildet wird, und zumindest ein Teil des Montagebereiches (12) als zumindest ein Teil der Mitnehmerkante (16) ausgebildet wird.

3. Verfahren nach einem der vorhergehenden Ansprüche, bei dem der Montagebereich (12) zusammen mit zumindest einem Teil des Zylinderrohres (2) in einem einzigen Arbeitsgang des Abstreckziehens erzeugt wird.

4. Verfahren nach einem der vorhergehenden Ansprüche, bei dem der Rohling (30) in einem sich an den Endbereich (6) anschließenden ersten Bereich (18) nach Art eines Leichtbauteils derart umgeformt wird, dass der erste Bereich (18) wandstärkenreduziert relativ zu anderen Bereichen des Zylinderrohrs ausgebildet wird.

5. Verfahren nach Anspruch 4, bei dem der Rohling (30) in einem zweiten Bereich (20) derart umgeformt wird, dass der zweite Bereich (20) nach Art eines Leichtbauteils als mechanisch stabiler Befestigungsbereich ausgebildet wird, wobei die Wandstärke in dem zweiten Bereich (20) größer ist als in dem ersten Bereich (18).

6. Verfahren nach einem der vorhergehenden Ansprüche, bei dem das Abstreckziehen im Endbereich (6) und im ersten (18) und zweiten Bereich (20), auf einem selben, in den Rohling (30) eingeführten Dorn (42) erfolgt.

7. Verfahren nach einem der vorhergehenden Ansprüche, bei dem ein solches Endstück (14) verwendet wird, das einen Mittelteil (24) eines Gabelhalters (22) bildet.

8. Verfahren nach einem der Ansprüche 1-6, bei dem ein solches Endstück (14) verwendet wird, das eine am Ringhalter (26) angebrachte Scheibe (28) bildet.

9. Stirnseitig fluiddicht verschlossenes Zylinderrohr (2), das ein Stoßdämpferrohr eines Stoßdämpfers eines Kraftfahrzeuges ist, mit
- einem aus einem rohrförmigen Rohling (30) mit Hilfe eines Abstreckziehens als Kaltumformverfahren, umgeformten Zylinderrohr (2),
- das an einem stirnseitigen Endbereich (6) eine Öffnung (8) und,
- im radial äußeren Randbereich (10) des Endbereiches (6) einen Montagebereich (12) und,
- ein am Montagebereich (12) fluiddicht angebrachtes, insbesondere verschweißtes, die Öffnung (8) fluiddicht verschließendes Endstück (14) aufweist, das einen Gabel- (22) oder Ringhalter (26) eines Stoßdämpfers aufweist,
- bei dem der Rohling (30) derart umgeformt ist, dass nach Art eines Leichtbauteils im Bereich eines Kraft- und/oder Schweißknotens eine größere Wandstärke (d_{1,2}) und/oder Festigkeit als an sonstigen Bereichen des Zylinderrohres (2) geschaffen ist.

10. Zylinderrohr (2) nach Anspruch 9, bei dem sich an der Stirnseite der Rohling radial nach innen wölbt, so dass am stirnseitigen Endbereich (6) des Rohlings (30) eine mit einem Kaltumformverfahren ausgebildete, die Öffnung (8) umgebende Mitnehmerkante (16) für ein Abstreckziehverfahren ausgebildet ist, und zumindest ein Teil des Montagebereiches (12) als zumindest ein Teil der Mitnehmerkante (16) ausgebildet ist.

11. Zylinderrohr (2) nach einem der Ansprüche 9 oder 10, bei dem der Rohling (30) in einem sich an den Endbereich (6) anschließenden ersten Bereich (18) nach Art eines Leichtbauteils derart umgeformt ist, dass der erste Bereich (18) wandstärkenreduziert relativ zu anderen Bereichen des Zylinderrohrs ausgebildet ist.

12. Zylinderrohr (2) nach Anspruch 11, bei dem der Rohling (30) in einem zweiten Bereich (20) derart umgeformt ist, dass der zweite Bereich (20) nach Art eines Leichtbauteils als mechanisch stabiler Befestigungsbereich ausgebildet ist, wobei die Wandstärke in dem zweiten Bereich (20) größer ist als in dem ersten Bereich (18).

13. Zylinderrohr (2) nach einem der Ansprüche 9 bis 12, bei dem ein Mittelteil (24) des Gabelhalters (22) das Endstück (14) ist.

14. Zylinderrohr (2) nach einem der Ansprüche 9 bis 12, bei dem das Endstück (14) eine am Ringhalter (26) angebrachte Scheibe (28) ist.

## Claims

1. A method for producing a cylinder tube (2) closed on the front end in a fluid-tight manner and which is a shock absorber tube of a shock absorber of a motor vehicle made from a tubular blank (30), **characterised by** the following steps:
(a) shaping the blank (30) into the cylinder tube (2) with the aid of ironing as a cold forming process such that an opening (8) remains in the cylinder tube (30) on a front end region (6) of the cylinder tube (2) and that, in the manner of a lightweight component, a greater wall thickness (d_{1,2}) and/or strength than on the rest of the cylinder tube (2) is created in the region of a force and/or welding node,
(b) producing a mounting region (12) in the radially outer edge region (10) of the end region (6),
(c) closing the cylinder tube (2) by fluid-tight attachment, in particular welding, of an end piece (14) to the mounting region, said end piece (14) closing the opening (8) in a fluid-tight manner, which mounting region has a fork holder (22) or ring holder (26) of a shock absorber.

2. The method according to Claim 1, wherein before step (a), by means of a cold forming process, a driver edge (16) which surrounds the opening (8) is formed on the end region (6) of the blank (30) for the ironing process that shapes the blank (30) into the cylinder tube (2), and at least a part of the mounting region (12) is formed as at least part of the driver edge (16).

3. The method according to either of the preceding claims, wherein the mounting region (12) is produced together with at least a part of the cylinder tube (2) in a single process step of the ironing.

4. The method according to any of the preceding claims, wherein the blank (30) is shaped in the manner of a lightweight component in a region (18) adjoining the end region (6), such that the first region (18) has a reduced wall thickness relative to the other regions of the cylinder tube.

5. The method according to Claim 4, wherein the blank (30) is shaped in a second region (20) such that the second region (20) is formed in the manner of a lightweight component as a mechanically stable fastening region, the wall thickness being greater in the second region (20) than in the first region (18).

6. The method according to any of the preceding claims, wherein the ironing takes place in the end region (6) and in the first (18) and the second region (20) on one and the same mandrel (42) that is inserted into the blank (30).

7. The method according to any of the preceding claims, wherein an end piece (14) is used which forms a central part (24) of a fork holder (22).

8. The method according to any of Claims 1-6, wherein an end piece (14) is used which forms a disc (28) attached to the ring holder (26).

9. A cylinder tube (2) closed on the front end in a fluid-tight manner and which is a shock absorber tube of a shock absorber of a motor vehicle, comprising
- a cylinder tube (2) shaped from a tubular blank (30) with the aid of ironing as a cold forming process,
- that has an opening (8) on a front end region (6) and,
- has a mounting region (12) in the radially outer edge region (10) of the end region (6), and
- has an end piece (14) that closes the opening (8) in a fluid-tight manner and that is attached, in particular welded, in a fluid-tight manner, to the mounting region (12), which end piece has a fork holder (22) or a ring holder (26) of a shock absorber,
- wherein the blank (30) is shaped such that, in the manner of a lightweight component, a greater wall thickness (d_{1,2}) and/or strength is created in the region of a force and/or welding node than in the other regions of the cylinder tube (2).

10. The cylinder tube (2) according to Claim 9, wherein the blank bends radially inwards on the front end so that on the front end region (6) of the blank (30) a driver edge (16) which surrounds the opening (8), formed by a cold forming process, is formed for an ironing process, and at least part of the mounting region (12) is formed as at least part of the driver edge (16).

11. The cylinder tube (2) according to either of Claims 9 or 10, wherein the blank (30) is shaped in the manner of a lightweight component in a first region (18) adjoining the end region (6), such that the first region (18) has a reduced wall thickness relative to the other regions of the cylinder tube.

12. The cylinder tube (2) according to Claim 11, wherein the blank (30) is shaped in a second region (20) such that the second region (20) is formed in the manner of a lightweight component as a mechanically stable fastening region, the wall thickness being greater in the second region (20) than in the first region (18).

13. The cylinder tube (2) according to any of Claims 9 to 12, wherein a central part (24) of the fork holder (22) is the end piece (14).

14. The cylinder tube (2) according to any of Claims 9 to 12, wherein the end piece (14) is a disc (28) attached to the ring holder (26).

## Revendications

1. Procédé pour produire à partir d'une ébauche tubulaire (30) un tube cylindrique (2) dont une extrémité frontale est fermée de façon étanche aux fluides, lequel est un tube absorbeur de chocs pour un amortisseur de véhicule motorisé, **caractérisé par** les étapes suivantes :
(a) former l'ébauche (30) selon un tube cylindrique (2) au moyen d'un étirage par un procédé de façonnage à froid, de façon à laisser dans le tube cylindrique (30) une ouverture (8) dans une zone d'extrémité (6) frontale du tube cylindrique (2), et de façon à réaliser selon la technique d'un composant léger une paroi de plus grande épaisseur (d_{1,2}) et/ou résistance dans une région d'un noeud de force et/ou de soudure que dans le reste du tube cylindrique (2),
(b) produire une région de montage (12) dans une région de bord (10) radialement externe de la zone d'extrémité (6),
(c) fermer le tube cylindrique (2) en fixant de façon étanche, en particulier par soudure, à la région de montage (12) une pièce d'extrémité (14) qui obture l'ouverture (8) de façon étanche aux fluides, laquelle pièce d'extrémité comprend une structure de montage en fourche (22) ou en anneau (26) d'un amortisseur.

2. Procédé selon la revendication 1, dans lequel, avant l'étape (a), avec un procédé de façonnage à froid on forme sur la zone d'extrémité (6) de l'ébauche (30) une bordure de guidage (16) qui entoure l'ouverture (8) pour le procédé d'étirage qui transforme l'ébauche (30) pour produire le tube cylindrique (2), et au moins une partie de la région de montage (12) est conformée pour réaliser au moins une partie de la bordure de guidage (16).

3. Procédé selon l'une quelconque des revendications précédentes, dans lequel la région de montage (12) ensemble avec au moins une partie du tube cylindrique (2) est produite dans une étape de fonctionnement unique du procédé d'étirage.

4. Procédé selon l'une quelconque des revendications précédentes, dans lequel l'ébauche (30) dans une première région (18) reliée à la zone d'extrémité (6) est formée comme un composant allégé de façon que la première région (18) soit conformée avec une épaisseur de paroi réduite par rapport aux autres parties du tube cylindrique.

5. Procédé selon la revendication 4, dans lequel l'ébauche (30) dans une seconde région (20) est formée de façon que la seconde région (20) soit réalisée selon la technique d'un composant léger comme une région de fixation mécaniquement robuste, dans laquelle l'épaisseur de paroi dans la seconde région (20) est plus grande que dans la première région (18).

6. Procédé selon l'une quelconque des revendications précédentes, dans lequel l'étirage dans la zone d'extrémité (6) et dans la première région (18) et la seconde région (20) est réalisé sur un même mandrin (42) qui est inséré dans l'ébauche (30).

7. Procédé selon l'une quelconque des revendications précédentes, dans lequel une telle pièce d'extrémité (14) est utilisée qui forme une partie centrale (24) d'une structure de montage en fourche (22).

8. Procédé selon l'une quelconque des revendications 1 à 6, dans lequel une telle pièce d'extrémité (14) est utilisée qui forme un disque (28) fixé à une structure de montage en anneau (26).

9. Tube cylindrique (2) qui est fermé de façon étanche à une extrémité frontale pour constituer un tube absorbeur de chocs d'un amortisseur d'un véhicule motorisé, comprenant
- un tube cylindrique (2) formé à partir d'une ébauche tubulaire (30) au moyen d'un étirage par un procédé de formage à froid,
- une ouverture (8) sur une zone d'extrémité (6) frontale du tube cylindrique,
- une région de montage (12) dans une région de bord (10) radialement externe de la zone d'extrémité (6) et
- une pièce d'extrémité (14) qui ferme l'ouverture (8) pour la rendre étanche aux fluides et qui est fixée sur la région de montage (12) de manière étanche aux fluides, en particulier par soudure, laquelle pièce d'extrémité comprend un élément de tenue en fourche (22) ou en anneau (26) d'un amortisseur,
- dans lequel l'ébauche (30) est formée de telle façon qu'elle soit formée selon la technique d'un composant léger en créant une paroi de plus grande épaisseur (d_{1,2}) et/ou résistance dans une région d'un noeud de force et/ou de soudure que dans le reste du tube cylindrique (2).

10. Tube cylindrique (2) selon la revendication 9, lequel comprend des renflements radialement vers l'intérieur sur le côté frontal de l'ébauche, de façon que dans la zone d'extrémité frontale (6) de l'ébauche (30) un bord de guidage (16) qui entoure l'ouverture (8) soit formé pour un procédé de formage par étirement, et au moins une partie de la région de montage (12) est formée comme au moins un tronçon du bord de guidage (16).

11. Tube cylindrique (2) selon l'une des revendications 9 ou 10, dans lequel l'ébauche (30) dans une première région (18) reliée à la zone d'extrémité (6) est formée selon la technique d'un composant allégé de façon que la première région (18) ait une épaisseur de paroi réduite par rapport aux autres régions du tube cylindrique.

12. Tube cylindrique (2) selon la revendication 11, dans lequel l'ébauche (30) dans une seconde région (20) est formée de façon que la seconde région (20) est réalisée comme une région de fixation mécaniquement robuste d'une pièce allégée, dans laquelle l'épaisseur de paroi dans la seconde région (20) est plus grande que dans la première région (18).

13. Tube cylindrique (2) selon l'une quelconque des revendications 9 à 12, dans lequel une partie centrale (24) de l'élément de tenue en fourche (22) est la pièce d'extrémité (14).

14. Tube cylindrique (2) selon l'une quelconque des revendications 9 à 12, dans lequel la pièce d'extrémité (14) est un disque (28) fixé à la pièce de tenue en anneau (26).
